# EUROPÄISCHE PATENTSCHRIFT

(11) **EP 1 313 775 B1**
(45) Veröffentlichungstag und Bekanntmachung des Hinweises auf die Patenterteilung: **22.04.2009**
(21) Anmeldenummer: 01974135.4
(22) Anmeldetag: 08.08.2001
(51) Int. Cl.: C08F 6/00

(54) **WASSER-IN-ÖL-POLYMERDISPERSIONEN MIT VERBESSERTER UMWELTVERTRÄGLICHKEIT**
WATER-IN-OIL POLYMER DISPERSIONS WITH IMPROVED ENVIRONMENTAL COMPATIBILITY
DISPERSIONS POLYMERES EAU DANS HUILE AYANT UN POUVOIR ECOLOGIQUE AMELIORE

(30) Priorität: 23.08.2000 DE 10041393
(43) Veröffentlichungstag der Anmeldung: 28.05.2003
(73) Patentinhaber: Ashland Licensing and Intellectual Property LLC, Dublin, OH 43017 (US)
(72) Erfinder: DIENER, Bernd, 47807 Krefeld (DE); GEHLER, Veronika, 47809 Krefeld (DE); KÜSTER, Erich, 47803 Krefeld (DE); ROULANDS, Daniel, 47807 Krefeld (DE); WERHAHN, Dieter, 47877 Willich (DE)
(74) Vertreter: Wolff, Felix
(86) Internationale Anmeldenummer: PCT/EP2001/009153
(87) Internationale Veröffentlichungsnummer: WO 2002/016446

(56) Entgegenhaltungen:
- EP-A- 0 547 492
- EP-A- 1 024 152
- US-A- 3 755 280
- US-A- 4 929 717
- US-A- 5 280 092

## Beschreibung

Die vorliegende Erfindung betrifft Wasser-in-Öl-Polymerdispersionen bestehend aus einer kontinuierlichen organischen Phase und darin fein verteilten wasserlöslichen Polymerisaten, wobei diese einen Restmonomerengehalt von kleiner 1.000 ppm aufweisen. Die vorliegende Erfindung betrifft desweiteren ein Verfahren zur Herstellung der erfindungsgemäßen Polymerdispersionen und deren Verwendung als Flokkungshilfsmittel, Verdickungsmittel, Zusatz zu Pflanzenschutz- und Erosionsschutzmitteln.

Wasser-in-Öl-Polymerdisperslonen enthaltend wasserlöslichen Homo- und Copolymere finden bereits heute eine breite Verwendung, beispielsweise als Flockungsmittel bei der Sedimentation von Feststoffen, insbesondere bei der Wasser- und Prozeßwasseraufbereltung bzw. Abwasserreinigung, bei der Rohstoffgewinnung, vorzugsweise von Kohle, Aluminium und Erdöl oder als Hilfsmittel bei der Papierher stellung und in der Zuckerindustrie. Da diese Polymerdispersionen in bestimmten Anwendungsbereichen, beispielsweise bei der Verwendung als Zusatz in Pflanzenschutz- oder in Erosionsschutzmitteln, häufig in der freien Natur verwendet werden, kommt den toxikologischen Eigenschaften solcher Dispersionen eine immer größere Bedeutung zu, denen die Produkte gemäß dem Stand der Technik oftmals nicht gerecht werden.

Aufgabe der vorliegenden Erfindung ist es daher, Wasser-in-Öl-Polymerdisperslonen zur Verfügung zu stellen, die im Vergleich zu Produkten gemäß dem Stand der Technik umweltverträglicher sind und beispielsweise als Flockungshllfsmittel, Verdikkungsmittel, Zusatz zu Erosions- und Pflanzenschutzmitteln oder zusammen mit anderen biologisch wirksamen Stoffen eingesetzt werden könnten.

Die Aufgabe wird erfindungsgemäß durch die Bereitstellung von Wasser-in-Öl-Polymerdispersionen gelöst, welche zu 20 bis 80 Gew.-% aus einer kontinuierlichen, mit Wasser praktisch nicht mischbaren organischen Phase und darin fein verteilten, wasserlöslichen Polymerisaten, welche hergestellt sind aus einer wässrigen Monomerenlösung, die wenigstens ein polymerisierbares, hydrophiles Monomer ausgewählt aus der Gruppe bestehend aus olefinisch ungesättigten Carbonsäuren, Carbonsäureanhydriden und Sulfonsäuren enthält, und gegebenenfalls Hilfsstoffen bestehen, dadurch gekennzeichnet, dass sie einen Restmonomerengehalt von kleiner 1.000 ppm, vorzugsweise von kleiner 500 ppm und besonders bevorzugt von kleiner 300 ppm, aufweisen.

Eine Wasser-in-Ö1-Polymerdispersion im Sinne der Erfindung umfaßt sowohl eine Polymeremulsion als auch eine Polymersuspension, wie sie z.B. in Ullmann's Encyclopedia of Industrial Chemistry, 1988, Vol. A11, Seite 254 beschrieben sind, die hiermit als Referenz eingeführt wird und somit als Teil der Offenbarung gilt.

Als Restmonomere im Sinne der vorliegenden Erfindung werden die in eine Polymerisationsreaktion eingesetzten und während der Polymerisation nicht umgesetzten Monomere verstanden, die somit nach der Polymerisation In der Polymerdispersion chemisch unverändert enthalten sind.

Bei den in den erfindungsgemäßen Wasser-in-Öl-Polymerdispersionen enthaltenen Polymerisaten handelt es sich um eine Klasse von Produkten, die vorzugsweise durch Umkehrphasen-Emulsionspolymerisation hergestellt werden. Dabei erzeugt man In einer kontinuierlichen, mit Wasser praktisch nicht mischbaren organischen Phase unter Zusatz von Wasser-in-Öl-Emulgatoren fein verteilte wasserlösliche Polymerisate.

Zur Herstellung der Polymerisate werden die Monomere der organischen Phase als Monomerenlösung, bestehend aus Wasser und geeigneten Monomeren zugesetzt. Erfindungsgemäß enthält die wässrige Monomerenlösung wenigstens ein polymerisierbares, hydrophiles Monomer ausgewählt aus der Gruppe bestehend aus olefinisch ungesättigten Carbonsäuren, Carbonsäureanhydriden und Sulfonsäuren. Diese kann aber auch aus einer Mischung von zwei oder mehreren Monomeren aus der Gruppe der polymerisierbaren, hydrophilen Monomere bestehen.

Hydrophile, wasserlösliche Monomere sind
- olefinisch ungesättigte Carbonsäuren und Carbonsäureanhydride, insbesondere Acrylsäure, Methacrylsäure, Itaconsäure, Crotonsäure, Glutaconsäure, Maleinsäure und Malelnsäureanhydrid und die wasserlöslichen Salze derselben,
- olefinisch ungesättigte Sulfonsäuren, insbesondere aliphatische oder aromatische Vinylsulfonsäuren, wie etwa Vinylsulfonsäure, Allylsulfonsäure, Styrolsulfonsäure, insbesondere Acryl- und Methacrylsulfonsäuren, wie etwa Sulfoethylacrylat, Sulfoethylrnethacrylat, Sulfopropylacrylat, Sulfopropylmethacrylat, 2-Hydroxy-3-methacryloxypropylsulfonsäure und 2-Acrylamido-2-methylpropansulfonsäure (AMPS) und die wasserlöslichen Salze derselben.

Auch wasserlösliche beziehungsweise wasserdispergierbare Derivate der Acryl- und Methacrylsäuren, insbesondere Acrylamid, Methacrylamid, N-alkylsubstituierte Acrylamide, 2-Hydroxyethylacrylat, 2-Hydroxyethylmethacrylat, Hydroxypropylacrylat, Hydroxypropylmethacrylat, C₁-C₄-Alkyl(meth)acrylat und Vinylacetat können als hydrophile, wasserlösliche Monomere eingesetzt werden.

Bevorzugt enthält die Monomerenlösung als Monomere Acrylsäure und/oder ein Acrylsäurederivat, besonders bevorzugt mindestens ein Salz der Acrylsäure und/oder Acrylamid und ganz besonders bevorzugt eine Mischung aus Acrylsäure, mindestens einem Salz der Acrylsäure, Acrylamid und einem Salz der 2-Acrylamido-2-methylpropansulfonsäure.

Zur Herstellung der monomerenhaltigen Wasser-in-Öl-Emulsion wird die Monomerenlösung einer organischen Phase zugesetzt, die einen Wasser-in-Öl-Emulgetor enthält. Als organische Phase können prinzipiell alle dem Fachmann für eine Umkehr-Emulsionspolymerisation bekannten Substanzen, vorzugsweise aliphatische Kohlenwasserstoffe, verwendet werden.

In einer bevorzugten Ausführungsform dieser Erfindung werden als organische Phase Fettsäureester verwendet. Besonders bevorzugt werden Ester von linearen gesättigten bzw. ungesättigten Fettsäuren, insbesondere Fettsäuren mit einer Alkylkettenlänge von mehr als 11 Kohlenstoffatomen, vorzugsweise Laurin-, Myristin-, Palmitin-, Stearin- und Ölsäure, mit Alkoholen verwendet. Als Alkoholkomponente werden vorzugsweise kurzkettige Alkohole, bevorzugt C₁-C₄-Alkohole, verwendet. Ebenfalls bevorzugt werden höhere, einmal verzweigte Alkohole eingesetzt, die vorzugsweise durch eine Guerbetsynthese hergestellt werden. Durch Verwendung dieser Substanzen werden Wasser-in-Öl-Polymerdlsperslonen erhalten, die eine sehr geringe Daphnlentoxizltät, gemessen nach der OECD Richtlinie 202, aufweisen.

Die Fettsäureester werden alleine oder bevorzugt in Mischung mit einem Kohlenwasserstoff oder einem Gemisch aus Kohlenwasserstoffen eingesetzt, wobei der Kohlenwasserstoff oder das Gemisch aus Kohlenwasserstoffen einen Siedepunkt von weniger als 200°C aufweisen. Ganz besonders bevorzugt werden zu diesem Zweck sogenannte Weißöle aus der Erdöldestillation oder Ligroin mit einem Siedebereich von 150-200°C verwendet.

Die organische Phase wird in einer Menge von 20 bis 80 Gew.%, bezogen auf die Menge der Dispersion, eingesetzt.

Als Emulgator werden der organischen Phase 0,5 bis 10 Gew.%, bezogen auf die Menge der Dispersion, mindestens eines öllöslichen Emulgators zugegeben. Vorzugsweise werden W/O-Emulgatoren verwendet. Besonders bevorzugt werden Sorbitanester, Phthalsäureester, Fettsäureglyceride und ethoxylierte Derivate derselben in Kombination mit W/O-Emulgatoren eingesetzt. Ganz besonders bevorzugt werden polymere Emulgatoren mit dem Handelsnamen Hypermer® (ICI, London, England) verwendet.

Nach Abschluß der Polymerisation wird der Polymerdlspersion vorzugsweise ein Restmonomerenvernichter zugesetzt. Der Zusatz wird so bemessen, daß der Gehalt an Restmonomeren in der resultierenden Wasser-in-Öl-Polymerdispersion kleiner als 1.000 ppm, vorzugsweise kleiner als 500 ppm und besonders bevorzugt kleiner als 300 ppm ist.

Restmonomerenvernichter im Sinne der vorliegenden Erfindung sind Substanzen, die polymerisierbare Monomere durch eine chemische Reaktion derart modifizieren, daß sie nicht mehr polymerisierbar sind, so daß sie im Sinne der vorliegenden Erfindung keine Monomere mehr sind. Zu diesem Zweck können Substanzen verwendet werden, die mit der in den Monomeren vorhandenen Doppelbindung reagieren und/oder Substanzen, die eine weitergehende Polymerisation einleiten können.

Als Restmonomerenvemichter, die mit der Doppelbindung reagieren, können z.B. Reduktionsmittel verwendet werden, vorzugsweise
- Substanzen aus der Gruppe der sauren und neutralen Salze der vom Schwefel abgeleiteten Säuren mit einer Oxidationszahl kleiner als VI, bevorzugt Natriumdithionit, Natriumthiosulfat, Natriumsulfit oder Natriumdisulfit, und/oder
- Substanzen mit einer Schwefelwasserstoffgruppe, vorzugsweise Natriumhydrogensulfid oder Verbindungen aus der Gruppe der Thiole, bevorzugt Merkaptoethanol, Dodecylmerkaptan, Thiopropionsäure oder Salze der Thiopropionsäure oder Thiopropansulfonsäure oder Salze der Thiopropansulfonsäure, und/oder
- Substanzen aus der Gruppe der Amine, bevorzugt aus der Gruppe der Amine mit niederer Flüchtigkeit, vorzugsweise Diisopropanolamin oder Aminoethylethanolamin, und/oder
- Substanzen aus der Gruppe, die aus Buntesalzen, Formamidinsulfinsäure, Schwefeldioxid, wäßrigen und organischen Lösungen von Schwefeldioxid oder Thioharnstoff.

Der Fachmann erkennt, daß auch eine Mischung von mindestens zwei Restmonomerenvernichtern aus einer oder mehreren Gruppen eingesetzt werden kann.

Zur Reduzierung des Restmonomerengehaltes durch eine erneut eingeleitete Polymerisation können die oben genannten Reduktionsmittel allein oder in Kombination mit Oxidationsmitteln, vorzugsweise Substanzen aus der Gruppe der Peroxodisulfate oder Hydroperoxide, bevorzugt Wasserstoffperoxid, verwendet werden. Desweiteren eignen sich Verbindungen, die bei erhöhter Temperatur in Radikale zerfallen, wie vorzugsweise Substanzen aus der Gruppe der Azoverbindungen, Peroxide oder Peroxodisulfate.

Vorzugsweise werden der Polymerdispersion 100 bis 20.000 ppm, bevorzugt 200 bis 5.000 ppm und besonders bevorzugt 500 bis 3.000 an Restmonomerenvernichtern zugesetzt.

Abschließend wird der Wasser-in-Öl-Polymerdispersion ein als Aktivator oder Inverter bezeichneter Öl-in-Wasser-Emulgator in einer Menge von 0,5 bis 10 Gew.%, bezogen auf die Menge der Emulsion, zugegeben. Vorzugsweise werden als Inverter ethoxylierte Fettalkohole eingesetzt, bevorzugt ethoxylierte Fettalkohole, die aus linearen und/oder verzweigten Fettalkoholen mit einer Alkylkettenlänge von mehr als 11 Kohlenstoffatomen hergestellt werden. Ebenfalls bevorzugt werden Ethoxylierungsprodukte von hochverzweigten Alkoholen, die durch Oxosynthese zugänglich sind, wie vorzugsweise Isotridecylalkohol, eingesetzt. Besonders bevorzugt wird als Invertor ein Ethoxylierungsprodukt von höheren, einmal verzweigten Alkoholen verwendet, die durch Guerbetsynthese erhältlich sind.

Die erfindungsgemäße Wasser-in-Öl-Polymerdispersion enthält vorzugsweise 10 bis 70 Gew.%, besonders bevorzugt 20 bis 50 Gew.% und ganz besonders bevorzugt 25 bis 40 Gew.%, an wasserlöslichen Polymerteilchen.

Die Polymerteilchen weisen vorzugsweise eine Partikelgröße von weniger als 2 µm, und besonders bevorzugt eine Partikelgröße von weniger als 1 µm auf.

Die erfindungsgemäßen, wasserlösliche Polymere enthaltenden, Wasser-in-Öl-Polymerdispersionen zeichnen sich gegenüber solchen nach dem Stand der Technik durch eine verbesserte Umweltverträglichkeit, insbesondere durch eine geringere Toxizität gegenüber Mikroorganismen aus. Insbesondere weisen sie einen nach dem Algentest gemäß der OECD Richtlinie 201 bestimmten EC₅₀-Wert von über 10 mg/l auf. Daneben werden auch im Daphnientest gemäß der OECD Richtlinie 202 teilweise EC₅₀-Werte von über 10 mg/l erhalten, so daß die erfindungsgemäßen Dispersionen nach europäischen Recht lediglich als "schädlich für Wasserorganismen" eingestuft werden. Eine Kennzeichnungspflicht mit dem Gefahrensymbol "N" entfällt.

Durch diese verbesserte Umweltverträglichkeit sind die erfindungsgemäßen Polymerdispersionen aus ökologischen Gesichtspunkten besonders für einen Einsatz in der freien Natur geeignet.

Ein weiterer Gegenstand der vorliegenden Erfindung ist ein Verfahren zur Herstellung der erfindungsgemäßen Wasser-in-Öl-Polymerdispersionen durch Umkehrphasen-Emulsionspolymerisation, vorzugsweise unter Verwendung eines oder mehrerer Fettsäureester als organische Phase, wobei der Polymerdispersion nach der Polymerisation ein Restmonomerenvernichter zugesetzt wird.

Die Polymerisation wird durch Zugabe der dem Fachmann bekannten Polymerisationsinitiatoren gestartet. Vorzugsweise werden hierzu Azoverbindungen, Peroxidverbindungen oder Redoxkatalysatoren, jeweils alleine oder in Mischung miteinander, in einer Menge von 0,001 bis 5 Gew.%, bezogen auf die Menge an Monomerenlösung, verwendet.

Die Polymerisation wird adiabatisch, isotherm oder als Kombination eines adiabatischen und isothermen Verfahrens durchgeführt.

Bei der isothermen Prozeßführung wird die Polymerisation bei einer bestimmten Temperatur unter vermindertem Druck gestartet, wie beispielsweise in der EP 228 397 B1 beschrieben. Diese Schrift wird hiermit als Referenz eingeführt und gilt als Teil der Offenbarung. Der verminderte Druck wird dabei so eingestellt, daß durch die entstehende Polymerisationswärme flüchtige Stoffe, wie Wasser und Bestandteile der organischen Phase, abdestillieren und die Temperatur nahezu konstant gehalten werden kann. Das Ende der Polymerisation ist dadurch charakterisiert, daß kein Destillat mehr übergeht. Nach der Polymerisation werden erfindungsgemäß der Polymerdispersion die o.g. Restmonomerenvernichter zugesetzt. Da die Polymerdispersion nach dem Ende der Reaktion sauerstofffrei ist, verläuft die Reduzierung der Menge an Restmonomeren nach Zusatz der Restmonomerenvernichter bei diesem Verfahren besonders effektiv. Vorzugsweise werden 100 bis 20.000 ppm, bevorzugt 200 bis 5.000 ppm und besonders bevorzugt 500 bis 3.000 ppm, bezogen auf die Dispersion, an Restmonomerenvernichter eingesetzt.

Analog zu dem isothermen Verfahren wird der adiabatische Prozeß bei einer bestimmten Temperatur im Bereich von 0 bis 50°C, vorzugsweise von 0 bis 25°C, gestartet. Die Polymerisation wird jedoch bei Atmosphärendruck ohne äußere Wärmezufuhr durchgeführt, bis durch die Polymerisationswärme eine vom Gehalt der Dispersion an polymerisierbarer Substanz abhängige, maximale Endtemperatur der Dispersion erreicht wird. Nach dem Ende der Polymerisation erfolgt eine Abkühlung der Reaktionsmischung, in deren Verlauf der Restmonomerenvernichter zugesetzt wird. Da bei dieser Prozeßführung keine sauerstofffreie Dispersionen erhalten werden, müssen größere Mengen an Restmonomerenvernichter eingesetzt werden. Vorzugsweise werden bei dieser Prozeßführung 100 bis 20.000 ppm, bevorzugt 500 bis 5.000 ppm, an Restmonomerenvernichter eingesetzt.

Die Polymerisation kann desweiteren als Kombination eines isothermen und adiabatischen Prozeßteils durchgeführt werden. Ein solcher Prozeß wird vorzugsweise zunächst isotherm geführt. Zu einem vorher bestimmten Zeitpunkt wird die Apparatur mit Inertgas belüftet und die Polymerisation bis zu einer bestimmten Endtemperatur adiabatisch weiter geführt. Daran anschließend wird der Ansatz bei vermindertem Druck unter Destillation bis auf eine vorgewählte Temperatur abgekühlt. Durch diese Verfahrensführung wird eine sauerstofffreie Polymerdispersion erhalten, so daß die Reduzierung der Menge an Restmonomeren nach Zusatz der Restmonomerenvernichter besonders effektiv verläuft. Vorzugsweise werden 100 bis 20.000 ppm, bevorzugt 200 bis 5.000 ppm und besonders bevorzugt 500 bis 3.000 ppm, bezogen auf die Dispersion, an Restmonomerenvernichter eingesetzt.

Abschließend wird der Dispersion ein auch als Aktivator oder Inverter bezeichneter Ö/W-Emulgator in einer Menge von 0,5 bis 10 Gew.%, bezogen auf die Menge der Dispersion, zugegeben. Als Inverter werden vorzugsweise ethoxylierte Fettalkohole eingesetzt, bevorzugt ethoxylierte Fettalkohole, die aus linearen und/oder verzweigten Fettalkoholen mit einer Alkylkettenlänge von mehr als 11 Kohlenstoffatomen hergestellt werden. Ebenfalls bevorzugt werden Ethoxylierungsprodukte von hochverzweigten Alkoholen, die durch Oxosynthese zugänglich sind, wie vorzugsweise lsotridecylalkohol, eingesetzt. Besonders bevorzugt wird als Invertor ein Ethoxylierungsprodukt von höheren, einmal verzweigten Alkoholen verwendet, die durch Guerbetsynthese zugänglich sind.

Mit dem erfindungsgemäßen Verfahren können im Vergleich zu den Verfahren nach dem Stand der Technik umweltverträglichere, wasserlösliche Polymere enthaltende Wasser-in-Öl-Polymerdispersionen hergestellt werden. Durch das erfindungsgemäße Verfahren werden Polymerdispersionen erhalten, die EC₅₀-Werte nach dem Algentest gemäß der OECD Richtlinie 201 von über 10 mg/l aufweisen. Teilweise werden auch im Daphnientest gemäß der OECD Richtlinie 202 EC₅₀-Werte von über 10 mg/l erhalten, so daß die erfindungsgemäßen Polymerdispersionen nach europäischen Recht lediglich als "schädlich für Wasserorganismen" eingestuft werden und eine Kennzeichnungspflicht mit dem Gefahrensymbol "N" entfällt.

Die erfindungsgemäßen Wasser-in-Öl-Polymerdispersionen können für zahlreiche Anwendungsgebiete eingesetzt werden. Vorzugsweise finden sie als Flockungshilfsmittel Verwendung, besonders bevorzugt bei der Eisenabtrennung im Bayer-Prozeß, im Bergbau bei der Aufarbeitung von Kohle und Erz und in der Zuckerindustrie. Ebenfalls besonders bevorzugt können sie als Flockungshilfsmittel bei der Abwasseraufreinigung, ganz besonders bevorzugt in Kombination mit einem weiteren Flokkungshilfsmittel, in der sogenannten Dualflockung, eingesetzt werden.

Desweiteren bevorzugt können die erfindungsgemäßen Wasser-in-Öl-Polymerdispersionen als Verdickungsmittel eingesetzt werden, oder als Zusatz zu Pflanzenschutzmitteln, mit anderen biologisch wirksamen Stoffen oder Erosionsschutzmitteln.

### Prüfmethode

Die Ermittlung der Toxizität gegenüber Mikroorganismen wurde entsprechend den OECD "Guidelines for Testing of Chemicals" durchgeführt.

Im einzelnen sind dies die OECD Richtlinie 201, "Alga, Growth Inhibition Test", und die OECD Richtlinie 202, "Daphnia sp., Acute Immobilisation Test and Reproduction Test" Part 1.

### Beispiele

Im folgenden wird die Erfindung anhand von Beispielen erläutert. Diese Erläuterungen sind lediglich beispielhaft und schränken den allgemeinen Erfindungsgedanken nicht ein.

Dabei werden folgende Abkürzungen verwendet:
- ABAH: 2,2'-Azo-bis-amidinopropan-dihydrochlorid
- AIBN: 2,2'-Azo-bis-2-methylpropionitril
- AMPS: 2-Acrylamido-2-methylpropansulfonsäure
- BO: 2-Butyl-octanol
- EO: Ethylenoxid (1,2-Epoxiethan)
- IHD: Isohexadecan
- ITDA: Isotridecylalkohol
- ITS: Isotridecylstearat
- ÖFSBOE: Ölfettsäurebutyloctylester
- RÖFSME: Rübölfettsäuremethylester

### Vergleichsbeispiel 1

Zunächst wird eine wäßrige Monomerenlösung aus folgenden Komponenten hergestellt:

| | |
|---|---|
| 457,0 g | Wasser |
| 84 g | AMPS, Natriumsalz, 50 %ige Lösung |
| 220 g | Acrylamid, 50 %ige Lösung |
| 320 g | Acrylsäure |
| 320 g | Natronlauge, 50 %ige Lösung |
| 3,0 g | Ameisensäure, 85%ig |
| 1,0 ml | Versenex® 80 |
| 0,5 g | ABAH |

Danach werden 30 g Hypermer® 1083 in 180 g RÖFSME und 300 g Isotridecylstearat gelöst und die wäßrige Monomerenlösung unter Rühren zugefügt. Nach Ausbildung der Emulsion wird diese mit einem schnellaufenden Haushaltsmixer homogenisiert und durch Ausblasen mit Stickstoff von gelöstem Sauerstoff befreit. Die Polymerisation wird bei 20°C durch Zugabe von 2 ml einer 0,2 %igen tert.-Butyl-hydroperoxidlösung und 2,4 ml Schwefeldioxidgas gestartet, wobei der Ansatz durch die entstehende Polymerisationswärme bis auf etwa 100°C aufgewärmt wird. Nach dem Abkühlen werden 80 g Isotridecylalkohol-6-aethoxylat eingerührt.

Die Ergebnisse der Toxizitätstests gegenüber Daphnien- und Algen sind in der Tabelle 1 aufgeführt.

### Beispiele 1 bis 12

### Vergleichsbeispiele 2 und 3

In diesen Beispielen werden Wasser-in-Öl-Polymerdispersionen nach den in der Tabelle 1 angegebenen Polymerisationsverfahren ("Fahrweise") hergestellt, wobei "i" isotherm und "a" adiabatisch bedeutet. Für die adiabatischen bzw. isothermen Polymerisationsverfahren werden die im folgenden beschriebenen Ansätze verwendet.

### Allgemeiner Ansatz für die adiabatische Polymerisation (Fahrweise "a")

Zunächst wird eine wäßrige Monomerenlösung aus folgenden Komponenten hergestellt:

| | |
|---|---|
| 485,0 g | Wasser |
| 78 g | AMPS, Natriumsalz, 50 %ige Lösung |
| 203,5 g | Acrylamid, 50 %ige Lösung |
| 297 g | Acrylsäure |
| 297 g | Natronlauge, 50 %ige Lösung |
| 3,0 g | Ameisensäure, 85%ig |
| 1,0 ml | Versenex® 80 |
| 0,5 g | ABAH |

Danach werden 30 g Hypermer® 1083 in 480 g organischer Phase gelöst und die wäßrige Monomerenlösung unter Rühren zugefügt. Nach Ausbildung der Emulsion wird diese mit einem schnellaufenden Haushaltsmixer homogenisiert und durch Ausblasen mit Stickstoff von gelöstem Sauerstoff befreit. Die Polymerisation wird bei 20°C durch Zugabe von 2 ml einer 0,2 %igen tert.-Butylhydroperoxidlösung und 2,4 ml Schwefeldioxidgas gestartet, wobei der Ansatz durch die entstehende Polymerisationswärme bis auf etwa 100°C aufgewärmt wird. Nach Erreichen der Spitzentemperatur wird die Polymerdispersion durch Vakuumdestillation bis auf etwa 40°C heruntergekühlt.

Im Falle der erfindungsgemäßen Beispiele werden noch unter Vakuum 40 g Nachsatz (SO₂ in Exxsol 100 oder Na₂SO₃-Lösung) zur Restmonomerenverringerung eingesaugt und nach dem endgültigen Abkühlen 4 % Aktivator eingerührt.

### Allgemeiner Ansatz für die isotherme Polymerisation (Fahrweise "i")

Zunächst wird eine wäßrige Monomerenlösung aus folgenden Komponenten hergestellt:

| | |
|---|---|
| 500,0 g | Wasser |
| 72,0 g | AMPS, Natriumsalz, 50 %ige Lösung |
| 186,0 g | Acrylamid, 50 %ige Lösung |
| 272,0 g | Acrylsäure |
| 211,0 g | Natronlauge, 50 %ige Lösung |
| 3,0 g | Ameisensäure, 85%ig |
| 1,0 ml | Versenex® 80 |
| 0,5 g | ABAH |

Danach werden 40 g Hypermer® 1083 in 440 g organische Phase gelöst und die wäßrige Monomerenlösung unter Rühren zugefügt. Nach Ausbildung der Emulsion wird diese mit einem schnellaufenden Haushaltsmixer homogenisiert und auf 60°C aufgeheizt. Danach werden 0,3 g AIBN zugesetzt und Vakuum angelegt. Es wird solange Wasser abdestilliert, bis der Ansatz sauerstofffrei ist und die Polymerisation startet. Durch die Vakuumdestillation bleibt die Reaktionstemperatur in einem Bereich von 60 - 65°C konstant. Nachdem etwa 90 ml Wasser destilliert wurden, schließt man die Verbindung zur Vakuumpumpe und belüftet die Apparatur solange mit Stickstoff, bis Normaldruck erreicht wird. Durch die restliche Polymerisationswärme wird der Ansatz dann bis auf etwa 90°C aufgeheitzt.

Nach Erreichen der Spitzentemperatur wird die Dispersion durch erneute Vakuumdestillation auf etwa 40°C heruntergekühlt.

Im Falle der erfindungsgemäßen Beispiele werden noch unter Vakuum 40 g Nachsatz (SO₂ in Exxsol 100 oder Na₂SO₃-Lösung) zur Restmonomerenverringerung eingesaugt und nach dem endgültigen Abkühlen 4 % Aktivator eingerührt.

Die einzelnen Substanzen für die organische Phase, den Aktivator und den Nachsatz sowie die Ergebnisse der Toxizitätstests gegenüber Daphnien- und Algen sind in der Tabelle 1 aufgeführt.

**Tabelle 1**

| **Beispiel** | **Fahrweise** | **Organische Phase** | **Aktivator** | **Nachsatz** | **Acrylsäure** **[ppm]** | **Daphnientoxizität** | **Algentoxizität** |
|---|---|---|---|---|---|---|---|
| Vergleichsbeispiel 1 | a | RÖFSME/ITS 3:5 | ITDA-5EO | - | 2.000 | 3,4 | 5,5 |
| Vergleichsbeispiel 2 | a | ITS | ITDA-5EO | - | 1.700 | 1,5 | 4,4 |
| Vergleichsbeispiel 3 | i | RÖFSME/Shellsol D 40 18:7 | ITDA-5EO | - | 1.800 | 33 | 9,7 |
| Beispiel 1 | a | RÖFSME/ITS 3:5 | ITDA-5EO | 2% SO₂ in Exxsol 100 | 160 | 2,1 | 74 |
| Beispiel 2 | a | RÖFSME/ITS 3:5 | ITDA-5EO | 2%ige Na₂SO₃-Lösung | 260 | 1,5 | 62 |
| Beispiel 3 | a | RÖFSME/IHD 18:7 | ITDA-5EO | 2%ige Na₂SO₃-Lösung | 340 | < 1 | 37 |
| Beispiel 4 | i | RÖFSME/Shellsol D 40 18:7 | ITDA-5EO | 5%ige Na₂SO₃-Lösung | 110 | 29 | 66 |
| Beispiel 5 | a | RÖFSME/Shellsol D 40 5:1 | ITDA-5EO | 2%ige Na₂SO₃-Lösung | 510 | 47 | 29 |
| Beispiel 6 | i | RÖFSME/Shellsol D 40 18:7 | ITDA-5EO | 2% SO₂ in Exxsol 100 | 360 | 37 | 37 |
| Beispiel 7 | i | RÖFSME/Shellsol D 40 18:7 | BO-5EO | 2%ige Na₂SO₃-Lösung | 510 | 64 | 80 |
| Beispiel 8 | i | ÖFSBOE/Shellsol D 40 18:7 | ITDA-5EO | 2%ige Nä₂SO₃-Lösung | 730 | 36 | 18 |

## Patentansprüche

1. Wasser-in-Öl-Polymerdispersionen bestehend zu 20 bis 80 Gew.-% aus einer kontinuierlichen, mit Wasser praktisch nicht mischbaren organischen Phase und darin fein verteilten, wasserlöslichen Polymerisaten, welche hergestellt sind aus einer wässrigen Monomerenlösung, die wenigstens ein polymerisierbares, hydrophiles Monomer ausgewählt aus der Gruppe bestehend aus olefinisch ungesättigten Carbonsäuren, Carbonsäureanhydriden und Sulfonsäuren enthält, und gegebenenfalls Hilfsstoffen, **dadurch gekennzeichnet, dass** sie einen Restmonomerengehalt von kleiner 1.000 ppm, vorzugsweise kleiner 500 ppm und besonders bevorzugt kleiner 300 ppm aufweisen.

2. Wasser-in-Öl-Polymerdispersionen nach Anspruch 1, **dadurch gekennzeichnet, dass** sie neben den 20 bis 80 Gew.-% der organischen Phase aus:
A) 10 bis 70 Gew.-%, bevorzugt 20 bis 50 Gew.-%, besonders bevorzugt 25 bis 35 Gew.-%, eines wasserlöslichen Polymerisates,
B) 0,5 bis 10 Gew.-% eines Wasser-in-Öl-Emulgators,
C) 100 bis 20.000 ppm eines Restmonomerenvemichters,
D) 0,5 bis 10 Gew.-% eines Invertors, und einem
E) Rest auf 100 Gew.-% Wasser
bestehen.

3. Wasser-in-Öl-Polymerdispersionen nach Anspruch 1 oder 2, **dadurch gekennzeichnet, dass** die organischen Phase ein Fettsäureester, bevorzugt ein Ester von linearen gesättigten und ungesättigten Fettsäuren, mit einer Alkylkettenlänge von mehr als 11 Kohlenstoffatomen und von C₁-C₄-Alkoholen oder höheren, unverzweigten Alkoholen, oder eine Mischung aus mindestens zwei dieser Ester ist.

4. Wasser-in-Öl-Polymerdispersionen nach Anspruch 3, **dadurch gekennzeichnet, dass** der Fettsäureester oder die Fettsäureester in Mischung mit einem Kohlenwasserstoff oder einem Kohlenwasserstoffgemisch besteht, wobei der Siedepunkt des Kohlenwasserstoffes oder des Kohlenwasserstoffgemisches weniger als 200°C beträgt.

5. Wasser-in-Öl-Polymerdispersionen nach einem der Ansprüche 1 bis 4, **dadurch gekennzeichnet, dass** das Polymerisat ein Polymer aus Acrylsäure und/oder mindestens einem Acrylsäurederivat ist.

6. Wasser-in-Öl-Polymerdispersionen nach einem der Ansprüche 1 bis 4, **dadurch gekennzeichnet, dass** das Polymerisat ein Polymer mindestens eines Salzes von Acrylsäure und Acrylamid ist.

7. Wasser-in-Öl-Polymerdispersionen nach einem der Ansprüche 1 bis 4, **dadurch gekennzeichnet, dass** das Polymerisat ein Polymer aus Acrylsäure und/oder einem Salz von Acrylsäure, Acrylamid und einem Salz von 2-Acrylamido-2-methylpropansulfonsäure ist.

8. Wasser-in-Öl-Polymerdispersionen nach einem der Ansprüche 1 bis 7, **dadurch gekennzeichnet, dass** die größte Dimension der Polymerisatteilchen weniger als 2 µm und bevorzugt weniger als 1 µm beträgt.

9. Wasser-in-Öl-Polymerdispersionen nach einem der Ansprüche 1 bis 8, **dadurch gekennzeichnet, dass** sie einen EC₅₀-Wert bestimmt nach der OECD Richtlinie 202 von mehr als 10 mg/l aufweisen.

10. Wasser-in-Öl-Polymerdispersionen nach einem der Ansprüche 1 bis 9, **dadurch gekennzeichnet, dass** sie einen EC₅₀-Wert bestimmt nach der OECD Richtlinie 201 von mehr als 10 mg/l aufweisen.

11. Verfahren zur Herstellung einer Wasser-in-Öl-Polymerdispersion nach den Ansprüchen 1 bis 10, vorzugsweise durch Umkehrphasen-Emulsionspolymerisation, **dadurch gekennzeichnet, dass** dem Polymerisat nach der Polymerisation ein Restmonomerenvernichter zugesetzt wird.

12. Verfahren nach Anspruch 11, **dadurch gekennzeichnet, dass** als Restmonomerenvernichter Substanzen aus der Gruppe der sauren und neutralen Salze der vom Schwefel abgeleiteten Säuren mit einer Oxidationszahl kleiner als VI, bevorzugt Natriumdithionit, Natriumthiosulfat, Natriumsulfit oder Natriumdisulfit, und/oder Substanzen mit einer Schwefelwasserstoffgruppe, vorzugsweise Natriumhydrogensulfid oder Verbindungen aus der Gruppe der Thiole, bevorzugt Merkaptoethanol, Dodecytmerkaptan. Thiopropionsäure oder Salze der Thiopropionsäure oder Thiopropansulfonsäure oder Salze der Thiopropansulfonsäure, und/oder Substanzen aus der Gruppe der Amine, bevorzugt aus der Gruppe der Amine mit niederer Flüchtigkeit, und/oder Substanzen aus der Gruppe, die aus Buntesalzen, Formamidinsulfinsäure, Schwefeldioxid, wässrigen und organischen Lösungen von Schwefeldioxid oder Thioharnstoff, bestehen, verwendet werden.

13. Verfahren nach Anspruch 11 oder 12, **dadurch gekennzeichnet, dass** Restmonomerenvernichter in einer Menge von 100 bis 20.000 ppm, bevorzugt 200 bis 5.000 ppm und besonders bevorzugt 500 bis 3.000 ppm, bezogen auf die Dispersion, verwendet werden.

14. Verwendung der Wasser-in-Öl-Polymerdispersionen nach einem der Ansprüche 1 bis 10 als Flockungsmittel bei der Sedimentation von Feststoffen, insbesondere bei der Wasser- und Prozesswasseraufbereitung bzw. Abwasserreinigung, bei der Rohstoffgewinnung, vorzugsweise von Kohle, Aluminium und Erdöl oder als Hilfsmittel bei der Papierherstellung und in der Zuckerindustrie.

15. Verwendung der Wasser-in-Öl-Polymerdispersionen nach einem der Ansprüche 1 bis 10 als Verdickungsmittel.

16. Verwendung der Wasser-in-Öl-Polymerdispersionen nach einem der Ansprüche 1 bis 10 als Zusatz zu einem Pflanzenschutzmittel oder zusammen mit anderen biologisch wirksamen Stoffen.

17. Verwendung der Wasser-in-Öl-Polymerdispersionen nach einem der Ansprüche 1 bis 10 als Zusatz zu einem Erosionsschutzmittel.

## Claims

1. Water-in-oil polymer dispersions consisting to an extent of 20 to 80 wt.% of a continuous, virtually water-immiscible organic phase and water-soluble polymers finely dispersed therein, which are produced from an aqueous monomer solution which contains at least one polymerisable, hydrophilic monomer selected from the group consisting of olefinically unsaturated carboxylic acids, carboxylic anhydrides and sulfonic acids, and optionally auxiliary substances, **characterised in that** said polymer dispersions have a residual monomer content of less than 1,000 ppm, preferably of less than 500 ppm and particularly preferably of less than 300 ppm.

2. Water-in-oil polymer dispersions according to claim 1, **characterised in that,** apart from the 20 to 80 wt.% of organic phase, they consist of:
A) 10 to 70 wt.%, preferably 20 to 50 wt.%, particularly preferably 25 to 35 wt.%, of a water-soluble polymer,
B) 0.5 to 10 wt.% of a water-in-oil emulsifier,
C) 100 to 20,000 ppm of a residual monomer scavenger,
D) 0.5 to 10 wt.% of an inverter, and
E) a remainder to 100 wt.% of water.

3. Water-in-oil polymer dispersions according to claim 1 or claim 2, **characterised in that** the organic phase is a fatty acid ester, preferably an ester of linear saturated and unsaturated fatty acids with an alkyl chain length of more than 11 carbon atoms and of C₁-C₄ alcohols or higher, unbranched alcohols, or a mixture of at least two of these esters.

4. Water-in-oil polymer dispersions according to claim 3, **characterised in that** the fatty acid ester or the fatty acid esters is/are in a mixture with a hydrocarbon or a hydrocarbon mixture, the boiling point of the hydrocarbon or of the hydrocarbon mixture amounting to less than 200°C.

5. Water-in-oil polymer dispersions according to any one of claims 1 to 4**, characterised in that** the polymer is a polymer of acrylic acid and/or of at least one acrylic acid derivative.

6. Water-in-oil polymer dispersions according to any one of claims 1 to 4, **characterised in that** the polymer is polymer of at least one salt of acrylic acid and acrylamide.

7. Water-in-oil polymer dispersions according to any one of claims 1 to 4, **characterised in that** the polymer is a polymer of acrylic acid and/or a salt of acrylic acid, acrylamide and a salt of 2-acrylamido-2-methylpropanesulfonic acid.

8. Water-in-oil polymer dispersions according to any one of claims 1 to 7, **characterised in that** the largest dimension of the polymer particles amounts to less than 2 µm and preferably less than 1 µm.

9. Water-in-oil polymer dispersions according to any one of claims 1 to 8, **characterised in that** they exhibit an EC₅₀ value determined according to OECD Guideline 202 of greater than 10 mg/l.

10. Water-in-oil polymer dispersions according to any one of claims 1 to 9, **characterised in that** they exhibit an EC₅₀ value determined according to OECD Guideline 201 of greater than 10 mg/l.

11. A method for producing a water-in-oil polymer dispersion according to claims 1 to 10, preferably by reversed-phase emulsion polymerisation, **characterised in that** a residual monomer scavenger is added to the polymer after polymerisation.

12. A method according to claim 11, **characterised in that** the residual monomer scavengers used are substances from the group of acidic and neutral salts of acids derived from sulfur with an oxidation number of less than VI, preferably sodium dithionite, sodium thiosulfate, sodium sulfite or sodium disulfite, and/or substances with a hydrogen sulfide group, preferably sodium hydrogensulfide or compounds from the group of thiols, preferably mercaptoethanol, dodecyl mercaptan, thiopropionic acid or salts of thiopropionic acid or thiopropanesulfonic acid or salts of thiopropanesulfonic acid, and/or substances from the group of amines, preferably from the group of amines with relatively low volatility, and/or substances from the group which consists of Bunte salts, formamidinesulfinic acid, sulfur dioxide, aqueous and organic solutions of sulfur dioxide or thiourea.

13. A method as claimed in claim 11 or claim 12, **characterised in that** residual monomer scavengers are used in a quantity of 100 to 20,000 ppm, preferably of 200 to 5,000 ppm and particularly preferably of 500 to 3,000 ppm, relative to the dispersion.

14. Use of the water-in-oil polymer dispersions according to any one of claims 1 to 10 as flocculants for settling solids, in particular in water and process water treatment or waste water treatment, in the extraction of raw materials, preferably of coal, aluminium and petroleum or as auxiliaries in papermaking and in the sugar industry.

15. Use of the water-in-oil polymer dispersions according to any one of claims 1 to 10 as thickeners.

16. Use of the water-in-oil polymer dispersions according to any one of claims 1 to 10 as an additive to a plant protection agent or together with other biologically active substances.

17. Use of the water-in-oil polymer dispersions according to any one of claims 1 to 10 as an additive to an antierosion agent.

## Revendications

1. Dispersions polymères eau dans l'huile, constituées de 20 à 80 % en poids d'une phase organique continue, pratiquement non miscible à l'eau et de polymères hydrosolubles qui y sont finement divisés, qui sont préparés à partir d'une solution aqueuse de monomères, qui contiennent au moins un monomère hydrophile polymérisable choisi parmi le groupe constitué d'acides carboxyliques, d'anhydrides carboxyliques et d'acides sulfoniques oléfiniquement insaturés, et éventuellement des auxiliaires, **caractérisées en ce qu'**elles présentent une teneur en monomères résiduels inférieure à 1.000 ppm, de préférence inférieure à 500 ppm, et particulièrement préférablement inférieure à 300 ppm.

2. Dispersions polymères eau dans l'huile selon la revendication 1, **caractérisées en ce qu'**elles sont constituées, en plus des 20 à 80 % en poids de la phase organique, de :
A) de 10 à 70 % en poids, de préférence de 20 à 50 % en poids, particulièrement préférablement de 25 à 35 % en poids, d'un polymère hydrosoluble,
B) de 0,5 à 10 % en poids d'un agent émulsifiant eau dans l'huile,
C) de 100 à 20.000 ppm d'un agent éliminant les monomères résiduels,
d) de 0,5 à 10 % en poids d'un inverseur, et
e) le reste d'eau jusqu'à 100 % en poids.

3. Dispersions polymères eau dans l'huile selon la revendication 1 ou 2, **caractérisées en ce que** la phase organique est un ester d'acides gras, de préférence un ester d'acides gras linéaires, saturés et insaturés, présentant une longueur de chaîne alkyle de plus de 11 atomes de carbone, et d'alcools en C₁-C₄ ou d'alcools non ramifiés supérieurs, ou un mélange d'au moins deux de ces esters.

4. Dispersions polymères eau dans l'huile selon la revendication 3, **caractérisées en ce que** l'ester d'acides gras ou les esters d'acides gras sont en mélange avec un hydrocarbure ou un mélange d'hydrocarbures, le point d'ébullition de l'hydrocarbure ou du mélange d'hydrocarbures étant inférieur à 200°C.

5. Dispersions polymères eau dans l'huile selon l'une quelconque des revendications 1 à 4, **caractérisées en ce que** le polymère est un polymère de l'acide acrylique et/ou d'au moins un dérivé de l'acide acrylique.

6. Dispersions polymères eau dans l'huile selon l'une quelconque des revendications 1 à 4, **caractérisées en ce que** le polymère est un polymère d'au moins un sel de l'acide acrylique et de l'acrylamide.

7. Dispersions polymères eau dans l'huile selon l'une quelconque des revendications 1 à 4, **caractérisées en ce que** le polymère est un polymère de l'acide acrylique et/ou d'un sel de l'acide acrylique, de l'acrylamide et d'un sel de l'acide 2-acrylamido-2-méthylpropanesulfonique.

8. Dispersions polymères eau dans l'huile selon l'une quelconque des revendications 1 à 7, **caractérisées en ce que** la plus grande dimension des particules de polymère est inférieure à 2 µm et de préférence inférieure à 1 µm.

9. Dispersions polymères eau dans l'huile selon l'une quelconque des revendications 1 à 8, **caractérisées en ce qu'**elles présentent une valeur de CE₅₀, déterminée conformément à la directive OECD 202, supérieure à 10 mg/l.

10. Dispersions polymères eau dans l'huile selon l'une quelconque des revendications 1 à 9, **caractérisées en ce qu'**elles présentent une valeur de CE₅₀, déterminée conformément à la directive OECD 201, supérieure à 10 mg/l.

11. Procédé de préparation d'une dispersion polymère eau dans l'huile selon les revendications 1 à 10, de préférence par polymérisation en émulsion en phase inverse, **caractérisé en ce qu'**un agent éliminant les monomères résiduels est ajouté au polymère après la polymérisation.

12. Procédé selon la revendication 11, **caractérisé en ce que** l'on utilise, en tant qu'agent éliminant les monomères résiduels, des substances parmi le groupe constitué des sels acides et neutres des acides dérivés du soufre présentant un degré d'oxydation inférieur à VI, de préférence le dithionite de sodium, le thiosulfate de sodium, le sulfite de sodium ou le disulfite de sodium, et/ou des substances renfermant un groupe sulfure d'hydrogène, de préférence l'hydrogénosulfure de sodium, ou des composés parmi le groupe constitué des thiols, de préférence le mercaptoéthanol, le dodécylmercaptan, l'acide thiopropionique ou des sels de l'acide thiopropionique, ou l'acide thiopropanesulfonique ou des sels de l'acide thiopropanesulfonique, et/ou des substances parmi le groupe constitué des amines, de préférence parmi le groupe constitué des amines présentant une plus faible volatilité, et/ou des substances parmi le groupe qui est constitué des sels de Bunte, de l'acide formamidine sulfinique, du dioxyde de soufre, de solutions aqueuses et organiques du dioxyde de soufre ou de la thiourée.

13. Procédé selon la revendication 11 ou 12, **caractérisé en ce que** les agents éliminant les monomères résiduels sont utilisés en une quantité de 100 à 20.000 ppm, de préférence de 200 à 5.000 ppm, et particulièrement préférablement de 500 à 3.000 ppm, par rapport à la dispersion.

14. Utilisation des dispersions polymères eau dans l'huile selon l'une quelconque des revendications 1 à 10 en tant qu'agents de floculation lors de la sédimentation de solides, en particulier lors du traitement des eaux et des eaux de procédé ou de l'épuration des eaux usées, lors de l'extraction de matières premières, de préférence du charbon, de l'aluminium et du pétrole, ou en tant qu'auxiliaire lors de la production du papier et dans l'industrie du sucre.

15. Utilisation des dispersions polymères eau dans l'huile selon l'une quelconque des revendications 1 à 10 en tant qu'agents épaississants.

16. Utilisation des dispersions polymères eau dans l'huile selon l'une quelconque des revendications 1 à 10 en tant qu'addition à un agent phytoprotecteur ou conjointement avec d'autres substances biologiquement actives.

17. Utilisation des dispersions polymères eau dans l'huile selon l'une quelconque des revendications 1 à 10 en tant qu'addition à un agent de protection contre la corrosion.
